(19) Europäisches Patentamt
European Patent Office
Office européen des brevets

(11) **EP 3 214 298 A1**

(12) **EUROPÄISCHE PATENTANMELDUNG**

(43) Veröffentlichungstag:
06.09.2017 Patentblatt 2017/36

(51) Int Cl.:
*F02K 3/06* ^(2006.01)      *F02C 7/04* ^(2006.01)

(21) Anmeldenummer: 16158556.7

(22) Anmeldetag: 03.03.2016

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA MD

(71) Anmelder: Alpha Velorum AG
9495 Triesen (LI)

(72) Erfinder: Martin, ZIEGLER
CH-6422 Steinen (CH)

(74) Vertreter: Kaminski Harmann
Patentanwälte AG
Landstrasse 124
9490 Vaduz (LI)

(54) **VERBESSERTES TURBOFANTRIEBWERK**

(57)    Die Erfindung betrifft ein Verfahren zur Schuberzeugung für ein Turbofantriebwerk und ein Turbofantriebwerk, wobei ein erfindungsgemässes Turbofantriebwerk eine Triebwerksgehäuse hat, welches Triebwerksgehäuse einen Triebwerkseinlauf (TREL), einen Fan-Rotor (FAN), ein Kerntriebwerk mit einem Eingangsdurchmesser und einer primären Schubdüse, und eine sekundären Schubdüse, aufweist, wobei der Triebwerkseinlauf bezogen auf die Rotationsachse einen Querschnittsverlauf aufweist, der in Strömungsrichtung geradlinig parallel oder konvergierend ausgebildet ist, wobei die grösste Querschnittsfläche des Triebwerkseinlaufs kleiner als die grösste Querschnittsfläche des Triebwerksgehäuses ist, und wobei die kleinste Querschnittsfläche des Triebwerkseinlaufs grösser als die Querschnittsfläche des Fan-Rotors ist.

STAND DER TECHNIK

Fig. 1

**Beschreibung**

Die Erfindung betrifft ein Turbofantriebwerk gemäss dem Oberbegriff des Anspruchs 1 und ein Verfahren zur Schuberzeugung für ein Turbofantriebwerk nach dem Oberbegriff des Anspruchs 10.

Der Stand der Technik dazu ist sehr umfassend beschrieben im Fachbuch "Flugzeugtriebwerke" von Willy J.G. Bräunling, Springer Verlag, 3. Auflage, 2009. Die Erläuterung der Erfindung erfolgt in Anlehnung an dieses Fachbuch, insbesondere in Anlehnung an die Musterrechnung in Kapitel 6.17.

Moderne Verkehrsflugzeuge fliegen im Reiseflug mit einer Geschwindigkeit $v$ von etwa Mach 0.8, das entspricht rund 900 km/h oder 250 m/s. Sie werden von Turbofantriebwerken angetrieben, bei denen Luft mit Reisegeschwindigkeit $c_0=v$ von vorne zuströmt, wobei der Luftstrom zweigeteilt ist. Der Primär-Massenstrom $\dot{m}_1$ fliesst durch das Kerntriebwerk mit der Gasturbine. Er ist das Arbeitsfluid für den Joule-Prozess, liefert den Sauerstoff für die Verbrennung des Kerosins, und verlässt das Triebwerk als Strahl mit hoher Temperatur und hoher Geschwindigkeit $c_9$. Der SekundärMassenstrom $\dot{m}_2$ fliesst als kalter Mantelstrom um das Kerntriebwerk herum. Er nimmt nicht am Joule-Prozess teil, sondern wird durch einen Fan-Rotor beschleunigt, der von der Gasturbine angetrieben wird. Er verlässt das Triebwerk als ringförmiger Strahl mit geringer Temperatur und geringer Geschwindigkeit $c_{19}$.

Das Verhältnis der beiden Luftmassenströme

$$\mu = \frac{\dot{m}_2}{\dot{m}_1}$$

ist das BypassVerhältnis . Mit steigendem Bypass-Verhältnis sinkt die mittlere Strahlgeschwindigkeit $\bar{c}$ des Triebwerks. Bezieht man die Reisegeschwindigkeit auf die mittlere Geschwindigkeit des Strahls, so erhält man eine normierte Reisegeschwindigkeit

$$\varphi_v = \frac{v}{\bar{c}}$$

. Damit das Triebwerk Schub liefert, muss der Strahl schneller sein als das Flugzeug, deshalb ist die normierte Reisegeschwindigkeit $\varphi_v$ immer kleiner als 1.

Der Gesamtwirkungsgrad des Antriebs hängt zum einen am thermischen Wirkungsgrad des Joule-Prozesses der Gasturbine, und zum anderen am Propulsionswirkungsgrad des Strahls.

Die Effizienz des Joule-Prozesses steigt mit dem Druckverhältnis der Kompression $\pi_v$. Deshalb strebt man ein hohes Druckverhältnis an. Hier nutzt man die Einlaufströmung des Triebwerks zur Vorkompression, indem man die Strömung mit Hilfe eines Einlaufdiffusors verzögert. Dadurch steigt das Druckverhältnis des Joule-Prozesses und sein Wirkungsgrad steigt. Moderne Triebwerke erreichen ein Druckverhältnis von über 40, neue Entwicklungen zielen auf ein Druckverhältnis bis 70.

Die Effizienz der Propulsion steigt mit der normierten Reisegeschwindigkeit $\varphi_v$. Deshalb strebt man ein hohes Bypass-Verhältnis an. Moderne Triebwerke erreichen hier Werte von 8 bis 10, neue Entwicklungen zielen auf ein Bypass-Verhältnis von 15. Höhere Werte sind nur mit veränderten Triebwerkskonzepten erzielbar, beispielsweise "Open-Rotor"-Antriebe mit frei laufenden Propellern. Hier entstehen jedoch bisher ungelöste Lärmprobleme, und man kann erwarten, dass Turbofantriebwerke mit ummanteltem Fan-Rotor für Verkehrsflugzeuge aus Lärmschutzgründen weiterhin bevorzugt werden.

Der Gesamtwirkungsgrad des Triebwerks ist das Produkt aus dem thermischen Wirkungsgrad des Joule-Prozesses und dem Propulsionswirkungsgrad $\eta_G = \eta_j \, \eta_p$. Dividiert man die Reisegeschwindigkeit durch den Gesamtwirkungsgrad, so erhält man die spezifische Leistung des Antriebs, und mit dem Heizwert $h_u$ des Kerosins erhält man den spezifischen Treibstoffverbrauch SFC des Triebwerks bei dieser Geschwindigkeit (specific fuel consumption):

$$SFC = \frac{v}{h_u \eta_G}$$

Bei einer konstanten Reisegeschwindigkeit von Ma = 0.8 sinkt der Verbrauch mit steigenden Einzel-Wirkungsgraden von Joule-Prozess und Propulsion. Man kann also erwarten, dass moderne Flugzeugtriebwerke mit zunehmendem Druck- und Bypass-Verhältnis proportional effizienter werden.

Das ist in der Realität nicht der Fall.

Eine Datenbankanalyse real ausgeführter Triebwerke zeigte, dass kein Triebwerk bei Mach = 0.8 die Schwelle von SFC = 15 g/s kN signifikant unterschritten hat, das entspricht einer thermischen Leistung von etwa 650 Watt pro Newton Schub bei 900 km/h Reiseflug. Trotz steigendem Druckverhältnis und Bypass-Verhältnis bleibt der Gesamtwirkungsgrad erheblich hinter den theoretischen Erwartungen zurück und liegt trotz erheblicher Anstrengungen bisher unter 40%. Bei real ausgeführten Triebwerken gibt es demnach versteckte Einflussfaktoren, welche den thermischen Wirkungsgrad der Gasturbine und den Propulsionswirkungsgrad des Triebwerks in bisher unbekannter Art und Weise mindern.

Eine Aufgabe der Erfindung ist es, eine verbesserte Vorrichtung und ein verbessertes Verfahren bereitzustellen, welche den Wirkungsgrad von Flugzeugtriebwerken, insbesondere von Turbofantriebwerken, steigern.

Diese Aufgabe wird durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird.

Die Erfindung wird in Anlehnung an das Kapitel 6.17 "Basisauslegung eines einfachen Turbofantriebwerks" im Fachbuch von Willy Bräunling, "Flugzeugtriebwerke" beschrieben. Die Erläuterung bezieht sich auf folgende 12

Figuren:

Fig. 1: Schema eines Turbofantriebwerks in Zwei-Wellen-Architektur;

Fig. 2: Ergebnis der Analyse von 26 ausgeführten Triebwerken mit Ermittlung des SFC im Reiseflug bei Mach 0.8 inklusive Trendanalyse;

Fig. 3: Nachrechnung mit Gegenüberstellung des realen Gesamtwirkungsgrads mit dem erwarteten idealen Gesamtwirkungsgrad.

Fig. 4: Typisches Geschwindigkeitsprofil eines Turbofantriebwerks am Beispiel der Musterauslegung in Bräunling "Flugzeugtriebwerke", Kapitel 6.17.

Fig. 5: Musterbeispiel der Strömungsgeschwindigkeiten in Flugzeugkoordinaten und in Bodenkoordinaten.

Fig. 6: Schema der Schuberzeugung durch aerodynamische Kräfte am rotierenden Propellerblatt.

Fig. 7: Einfluss des Staudrucks auf die Schuberzeugung am Fan-Rotor.

Fig. 8 Auswirkung der Wechselwirkung zwischen Staudruck und Fan-Rotor auf den spezifischen Impuls und den SFC des Triebwerks.

Fig. 9: Geschwindigkeitsprofil A.

Fig. 10: Schema eines Turbofantriebwerks für Geschwindigkeitsprofil A.

Fig. 11: Geschwindigkeitsprofil B.

Fig. 12: Schema eines Turbofantriebwerks für Geschwindigkeitsprofil B.

Zur Verdeutlichung der Erfindung erfolgt eine Analyse des Geschwindigkeitsprofils der Axialströmung durch ein komplettes Triebwerk hindurch, sowie eine Analyse der Schuberzeugung am rotierenden Fan-Rotor durch aerodynamische Kräfte. In beiden Fällen werden bisher unbekannte Einflussfaktoren offenbar, die man in der Zukunft beim Entwurf von Turbofantriebwerken berücksichtigen muss.

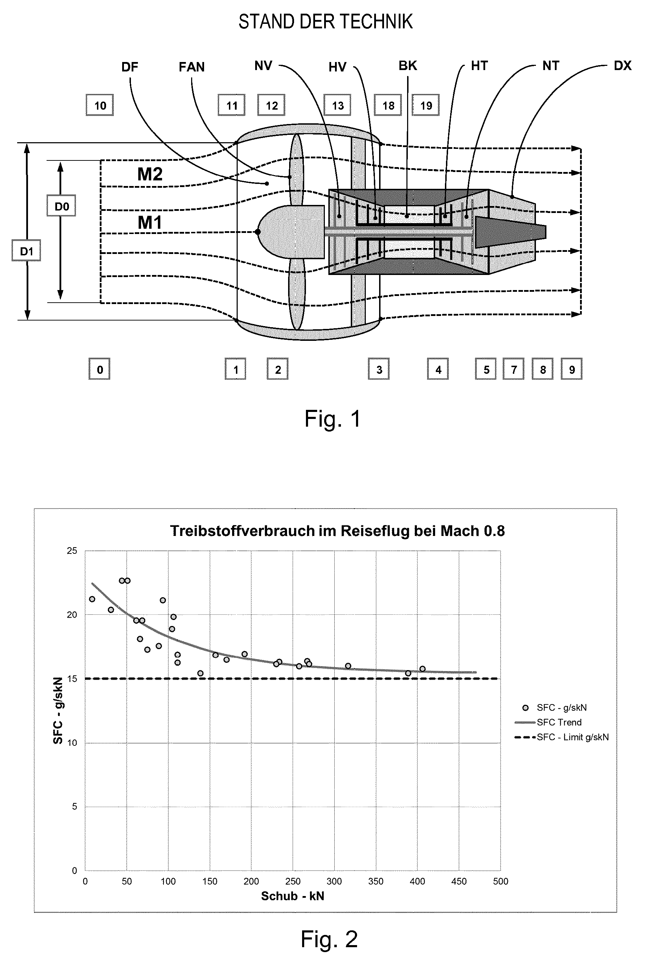

Figur 1 zeigt das Schema eines Turbofantriebwerks nach dem Stand der Technik in Zwei-Wellen-Architektur mit den wichtigsten Funktionselementen und ausgewiesenen Stationen 0 bis 9 für das Kerntriebwerk, sowie 10 bis 19 für den Mantelstrom (in Diagrammen der folgenden Figuren ebenfalls 0 bis 9).

Die Luft strömt dem Triebwerk von vorne aus der Umgebung zu (Station 0, 10). Weit vor dem Triebwerk ist die Fangstromröhre zylindrisch mit Durchmesser D0. Am Triebwerkseinlauf (Station 1, 11) weitet sich die Fangstromröhre bis Durchmesser D1 auf, die Strömung wird verzögert und der Druck steigt. Beide Teilmassenströme M1 und M2 gelangen in den Einlaufdiffusor DF, der den statischen Druck bis zum Rotor des FAN durch Verzögerung weiter erhöht (Station 2, 12). Der FAN wird durchströmt, und der Druck steigt gemäss Fan-Druckverhältnis (Station 13). Dabei bildet der FAN auch die erste mechanische Verdichterstufe für den Primär-Massenstrom M1. Dieser gelangt nun über den Niederdruckverdichter NV und den Hochdruckverdichter HV in die Brennkammer BK, wo die Luft durch Verbrennung von Kerosin erhitzt wird (Station 4). Ihre Expansion über die Hochdruckturbine HT treibt den Hochdruckverdichter HV mittels Sekundärwelle an, die weitere Expansion über die Niederdruckturbine NT treibt den Niederdruckverdichter und die FAN-Stufe mittels Primärwelle an. Das heisse Gas verlässt die Turbine (Station 5) und erreicht den Eingang der primären Schubdüse DX (Station 7). Im konvergenten Teil dieser Düse wird die Strömung bis zur Schallgeschwindigkeit beschleunigt (Mach = 1, Station 8), im divergenten Teil erfolgt die Restexpansion auf Umgebungsdruck (Station 9). Der Sekundärmassenstrom M2 wird in der sekundären Schubdüse ebenfalls bis Mach =1 beschleunigt (Station 18) und dann auf Umgebungsdruck expandiert (Station 19). Nach diesem Schema arbeiten alle modernen Turbofan-Triebwerke für Verkehrsflugzeuge, wobei auch Triebwerke mit drei koaxialen Wellen realisiert wurden.

Figur 2 zeigt die Analyse des Treibstoffbedarfs real ausgeführter Triebwerke von Verkehrsflugzeugen im Reiseflug bei etwa Mach = 0.8 über dem Nominalschub. Es ist bekannt, dass ein hoher Schub nur mit hohem Bypass-Verhältnis erreicht wird. Jüngere Triebwerke sind daher weiter rechts im Diagramm zu finden. Es ist weiterhin bekannt, dass die Entwicklung moderner Triebwerke mit einer Steigerung des Druckverhältnisses einherging. Man erwartet daher einen Trend mit sinkendem SFC in Richtung der hohen Schubwerte. Die Trendlinie zeigt aber ein unerwartetes Verhalten: Der SFC tendiert gegen einen Grenzwert bei 15 g/s kN. Kein reales Triebwerk aus der Analyse hat diesen Wert im Reiseflug bei Mach = 0.8 unterboten. Das ist ein Hinweis für die Existenz bisher unbekannter Effekte bei der Schuberzeugung von Turbofantriebwerken.

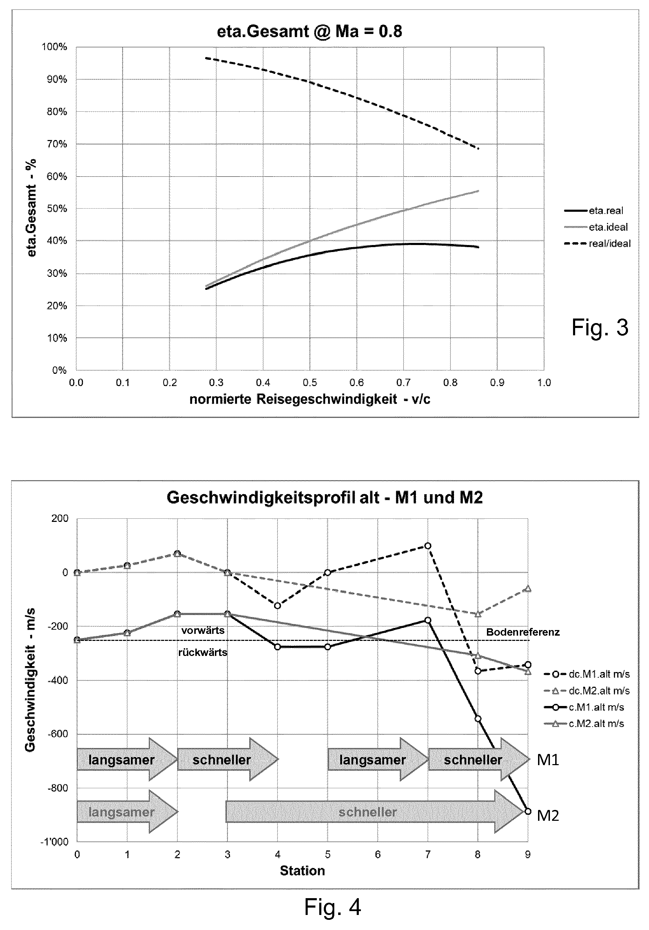

Figur 3 zeigt das Ergebnis der Analyse von erwarteten Gesamtwirkungsgraden bei idealen Bedingungen für den Joule-Prozess und die Strahlpropulsion im Vergleich zu realen Gesamtwirkungsgraden für den Reiseflug bei Mach = 0.8 aufgetragen über der normierten Reisegeschwindigkeit. Der reale Wirkungsgrad fällt gegenüber dem erwarteten idealen Wirkungsgrad bei steigender normierter Reisegeschwindigkeit erheblich zurück. Es gibt also Ineffizienzen, deren Einfluss mit wachsendem Druckverhältnis und wachsendem Bypass-Verhältnis zunimmt.

Klarheit verschafft hier eine Analyse des Geschwindigkeitsprofils der Strömung durch das Triebwerk hindurch, sowie die Analyse der Schuberzeugung am Fan-Rotor.

Figur 4 zeigt das Geschwindigkeitsprofil c der Strömung durch das Triebwerk für beide Massenströme M1 und M2 über alle Stationen 0 bis 9 (10 bis 19) hinweg, sowie die Änderungen der Geschwindigkeit dc zwischen benachbarten Stationen. Das Vorzeichen bezeichnet die Richtung der Strömung. Positive Werte bedeuten "in Flugrichtung", negative Werte "gegen die Flugrichtung". Bei Station 0 hat die Strömung eine Geschwindigkeit von minus 250 m/s, sie strömt also mit Fluggeschwindigkeit von vorne nach hinten in den Einlauf des Triebwerks hinein. Bei minus 250 m/s befindet sich im Diagramm eine horizontale gestrichelte Linie über alle Stationen hinweg. Sie stellt die "Bodenreferenz" dar. Bei allen Werten oberhalb der Bodenreferenzlinie bewegt sich die Strömung in Bezug auf den Boden vorwärts in Flugrichtung, bei allen Punkten unterhalb der Bodenreferenzlinie bewegt sich die Strömung in Bezug auf den Boden rückwärts entgegen der Flugrichtung.

Bis Station 2 werden beide Teilmassenströme M1 und M2 durch den Einlaufdiffusor relativ zum Triebwerk von minus 250 m/s auf minus 150 m/s verzögert. Dadurch entsteht ein Staueffekt und der Druck steigt. Die Massenkräfte der Verzögerung wirken gegen die Flugrichtung, das mindert den Schub. Der Staueffekt steigert den Eingangsdruck der Gasturbine, das verbessert den Wirkungsgrad des Joule-Prozesses. Die Geschwindigkeitsänderung ist plus 100 m/s, die Strömung bewegt sich relativ zum Boden in Flugrichtung - so ähnlich wie eine Bugwelle bei einem Schiff.

Bei der Durchströmung von Fan-Rotor und Verdichter ändert sich die Geschwindigkeit im Beispiel nicht (Station 3, 13), dann trennen sich die Massenströme.

Der Primärmassenstrom M1 wird bis zum Brennkammerausgang nach hinten beschleunigt (Station 4) und durchströmt die Turbine mit konstanter Geschwindigkeit (Station 5), dabei fliesst er relativ zum Boden nach hinten gegen die Flugrichtung. Bis zur Schubdüse wird die Strömung wieder verzögert (Station 7), Druck baut sich auf, und die Strömung bewegt sich relativ zum Boden wieder nach vorne in Flugrichtung. Die Massenkräfte der Verzögerung wirken gegen die Flugrichtung. In der Schubdüse wird der Druck schliesslich abgebaut und die Strömung wird wieder nach hinten beschleunigt (Station 8 und 9). Als Reaktion darauf entsteht Schub.

Der Sekundärmassenstrom M2 wird nach dem FAN nur nach hinten beschleunigt, die Massenkräfte wirken in Flugrichtung (Station 18 und 19).

Im Beispiel werden die Massenströme im Diffusor zunächst verzögert um Staudruck aufzubauen. Die Verzögerung bewirkt Trägheitskräfte gegen die Flugrichtung. Jeder Druckaufbau ist aber stets mit einer Temperaturerhöhung verbunden, und daraus entsteht immer auch ein Wärmestrom. Deshalb ist jede Kompression verlustbehaftet. Der Sekundär-Massenstrom M2 wird nach dem FAN nur noch nach hinten beschleunigt. Die Reaktionskraft aus dieser Beschleunigung wirkt als Schub in Flugrichtung.

Das Beispiel macht deutlich, dass Verzögerungen in der Strömung zu Druckerhöhungen führen, deren Massenkräfte gegen die Flugrichtung wirken, wobei die Temperaturerhöhung aus jeder Kompression zu einem Wärmestrom führt, der thermische Verluste verursacht. Im Primär-Massenstrom enthält das Beispiel zwei Verzögerungen und zwei Beschleunigungen, im Sekundär-Massenstrom gibt es nur eine Verzögerung und eine Beschleunigung. Der Primär-Massenstrom enthält mit der zweiten Verzögerung daher eine versteckte Verlustquelle, welche die Effizienz des Joule-Prozesses mindert und somit den thermischen Wirkungsgrad der Gasturbine senkt.

Noch einmal zusammengefasst, werden die Verzögerungen und die Beschleunigungen der beiden Luftmassenstromteile M1 und M2 mit den Pfeilen im unteren Teil des Diagramms der Figur 4 dargestellt.

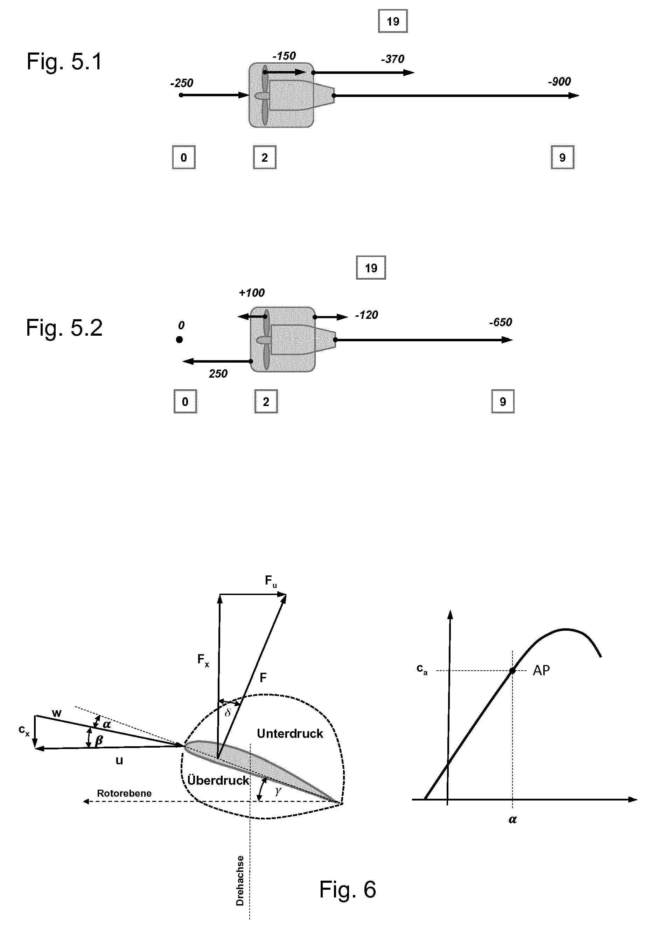

Die Figuren 5.1 und 5.2 zeigen die Geschwindigkeiten am Triebwerk während des Flugbetriebs, wobei Figur 5.1 das Geschwindigkeitsverhalten von Zufluss und Abfluss aus der Sicht eines Piloten an Bord des Flugzeugs zeigt, und Figur 5.2 das Geschwindigkeitsverhalten von Zufluss und Abfluss aus der Sicht eines Fluglotsen am Boden zeigt. Alle Zahlenwerte haben die Einheit "Meter pro Sekunde", positive Zahlen bedeuten "Strömung bewegt sich in Flugrichtung", negative Zahlen bedeuten "Strömung bewegt sich gegen die Flugrichtung".

Figur 5.1 zeigt die Strömung aus Pilotensicht, das ist auch die Sichtweise zur Schubermittlung aus den Eckdaten eines Impulsbilanzraumes bei der Auslegungsrechnung. Die Musterauslegung nach Bräunling, Kapitel 6.17, folgt dieser Sichtweise. Danach bewegt sich die Strömung in Bezug auf das Flugzeug stets gegen die Flugrichtung. Sie fliesst mit minus 250 m/s von vorne in das Triebwerk hinein, und wird bis zum Fan-Rotor auf minus 150 m/s verzögert. Der Mantelstrom verlässt das Triebwerk mit minus 370 m/s, der heisse Strahl mit minus 900 m/s.

Figur 5.2 zeigt die Strömung aus Bodensicht. Das Flugzeug bewegt sich mit plus 250 m/s durch ruhende Luft. Der Fan-Rotor wird mit minus 150 m/s von vorne nach hinten durchströmt. Deshalb muss sich die Luft kurz vor dem Fan-Rotor in Fahrtrichtung bewegen, mit plus 100 m/s. Das Triebwerk schiebt ruhende Luft wie eine Bugwelle vor sich her, dadurch entsteht der Staueffekt. Der Mantelstrom verlässt das Triebwerk rückwärts mit minus 120 m/s über Grund, der heisse Strahl fliesst rückwärts mit minus 650 m/s. Die Bewegungsenergie der beiden Massenströme M1 und M2 im Strahl über Grund enthält die Strahlverluste aus der Propulsion. Diese Sichtweise ist äquivalent zu Figur 5.1, allerdings wird sie beim Triebwerksentwurf bisher nicht berücksichtigt. Die Auslegungen nach Bräunling enthalten keine Bodenkoordinaten. In Bodensicht wird ruhende Luft also zunächst nach vorne beschleunigt und als "Bugwelle" aufgestaut, anschliessend wird sie im Triebwerk nach hinten beschleunigt und rückwärts ausgestossen. Die Massenkräfte der "Bugwelle" erzeugen den Staueffekt und wirken gegen die Flugrichtung, aus der Beschleunigung nach hinten entsteht der Schub in Flugrichtung. Der Staueffekt hat einen Einfluss auf den Schub.

Figur 6 zeigt den Mechanismus der Schubentstehung am Fan-Rotor nicht nach der einfachen Strahltheorie mit Impulsbilanzierung von Zustrom und Abstrom, sondern nach der Blattelementtheorie für den Propellerentwurf. Danach wird jedes Propellerblatt als rotierende Tragfläche modelliert, an der Luftkräfte aus der Wechselwirkung mit der Strömung entstehen, das sind Auftrieb und Widerstand, wie bei einer Tragfläche. Bei dieser Modellierung wird der Fan-Rotor in seine Blätter zerlegt, und jedes Blatt in eine Anzahl Profilschnitte deren Grösse und Richtung mit dem Abstand von der Drehachse variiert. Zwischen zwei Profilschnitten erstreckt sich dann ein "Blattelement", an dem Auftrieb und Widerstand wirken. Dieses Modell wird für den Entwurf von Propellern mit geringer Blattdichte eingesetzt und liefert gute Resultate. Bei der hohen Blattdichte von Fan-Rotoren gibt es Interferenzen zwischen benachbarten Blättern, die durch die Blattelementtheorie nicht abgebildet werden. Trotzdem ist das Modell hilfreich bei der Analyse der Schubübertragung am Fan-Rotor.

Die einfache Strahltheorie bilanziert Strömungsimpulse an den Grenzen eines Bilanzraums und ermittelt daraus den Schub. Diese Theorie kommt ohne Propeller aus, weil sie das Triebwerk als "Black-Box" betrachtet. Wenn man den Fan-Rotor aus dem Triebwerk entfernt, dann liefert es aber keinen Schub - kein Propeller, kein Schub - das ist offensichtlich. Folglich entsteht der Schub nicht aus Differenzen von Strömungsimpulsen an den Bilanzgrenzen eines Triebwerks, sondern aus Luftkräften aus der Wechselwirkung zwischen der Strömung und der Oberfläche von Bauteilen im Inneren des Triebwerks. Der Strahl ist dann die Wirkung der Schuberzeugung und nicht seine Ursache, und die physikalische Modellierung mit der Impulsbilanz ist "zu einfach".

Figur 6.1 zeigt schematisch die Kraftentstehung am Blattelement infolge der Wechselwirkung mit der Strömung. Das Blattelement dreht sich in Rotorebene von rechts nach links mit Umfangsgeschwindigkeit u um die vertikale Drehachse des Fan-Rotors und wird axial mit der Geschwindigkeit cx von oben nach unten durchströmt. Aus der Blattbewegung und der Strömung entsteht die relative Anströmung w am Profilschnitt aus der die Luftkraft F resultiert, die in zwei Komponenten Fx und Fu zerlegt werden kann. Fx zeigt in Flugrichtung und bewirkt den Schub mit dem das Flugzeug fliegt, Fu zeigt gegen die Drehrichtung des Rotors und bewirkt ein Drehmoment, das die Gasturbine für den Antrieb des Rotors aufwenden muss. Nach diesem Modell werden Propeller vielfach entworfen.

Die Blattneigung $\gamma$ der Profilsehne gegen die Rotorebene ist ein Konstruktionsmerkmal und ändert sich im Flug nicht, es sei denn man hat einen verstellbaren Propeller. Aus der Strömungsgeschwindigkeit cx und der Umfangsgeschwindigkeit u ergibt sich die Anströmrichtung $\beta$ zur Rotorebene. Sie ändert sich mit der Fluggeschwindigkeit. Aus Blattneigung Y und Anströmrichtung $\beta$ ergibt sich die Richtung der Anströmung $\alpha$ am Profilschnitt. Daraus ergibt sich der Arbeitspunkt AP des Profils mit dem Auftriebsbeiwert zur Ermittlung der Auftriebskraft. Figur 6.2 zeigt die typische Auftriebspolare eines gewölbten Profils mit der Darstellung des Arbeitspunktes AP mit dem Auftriebsbeiwert über dem Anströmwinkel des Profils. Gemeinsam mit dem Widerstand ergibt sich die am Profil wirksame Luftkraft F, die mit Winkel $\delta$ gegen die Rotorachse geneigt ist. Genau wie bei einer Tragfläche führt die Umströmung des Profils zu Unterdruck auf der Oberseite und zu Überdruck auf der Unterseite. Die resultierende Luftkraft ergibt sich dann aus der Integration der asymmetrischen Druckverteilung an der Oberfläche des Rotorblatts.

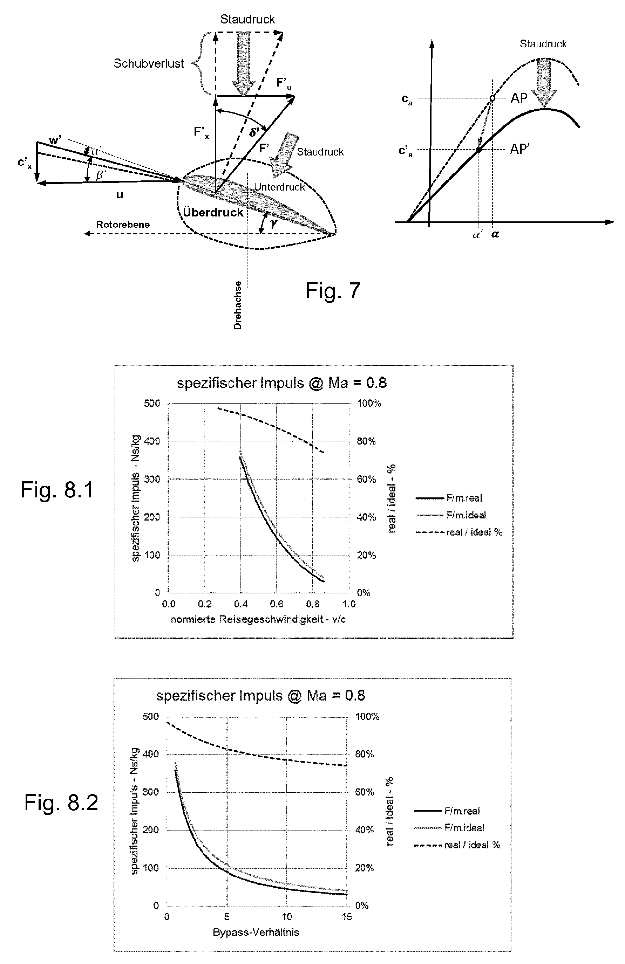

Nun kommt der Staudruck hinzu. Figur 7 zeigt die Wirkung des Staudrucks auf die Druckverteilung am Profilschnitt. Mit steigender Fluggeschwindigkeit nimmt der Volumenstrom durch den Staueffekt etwas zu. Die axiale Strömungsgeschwindigkeit wächst von cx auf c'x, und die Anströmung w dreht sich in Richtung der Blattsehne nach w' wodurch der Anströmwinkel $\alpha$ auf $\alpha$' sinkt und der Arbeitspunkt des Profils sich von AP zu AP' in Richtung kleinerer Auftriebsbeiwerte verschiebt. Der Staueffekt im Diffusor erhöht den Druck auf der Oberseite des Rotorblatts, wodurch der Unterdruck aufgefüllt wird, was die resultierende Luftkraft und die Profilpolare verändert. Die Luftkraft F am Profilschnitt verliert einen Teil ihrer Axialkomponente Fx, und ihre Richtung zur Rotorachse dreht sich gegen die Drehrichtung des Rotors von Winkel $\delta$ zu $\delta$.

Dieser Mechanismus ist in Figur 7.1 dargestellt. Mit wachsender Fluggeschwindigkeit wächst die Axialströmung, und der Anströmwinkel am Rotorblatt dreht sich. Der Unterdruck auf der Blattoberseite wird durch den Staudruck aufgefüllt. Nach Integration der Druckverteilung erhält man eine resultierende Luftkraft mit verminderter Axialkomponente und erhöhter Umfangskomponente, und das Verhältnis von Schub zu Drehmoment sinkt. Bei gleicher Leistung verliert das Triebwerk durch die Wirkung des Staudrucks an Schub. Diesen Effekt kann das Schubmodell mit der Impulsbilanz von Strömungsimpulsen nicht darstellen.

Figur 7.2 zeigt die Wirkung des Staudrucks auf die Auftriebspolare des Blattprofils. Der maximal erzielbare Auftrieb sinkt, und die Polare wird geometrisch gestaucht. Der Arbeitspunkt wandert zu kleinen Auftriebsbeiwerten, zum einen, weil sich die Anströmung des Profils in Richtung Blattsehne dreht, und zum anderen, weil die Polare wegen der Druckanhebung auf der Blattoberseite gestaucht wird.

Die Analyse zeigt die beiden gegenläufigen Effekte des Staudrucks im Eingangsdiffusor des Triebwerks:

1. Der Staueffekt erhöht den Eingangsdruck der Gasturbine. Dadurch steigt das Druckverhältnis des Joule-Prozesses, was den thermischen Wirkungsgrad erhöht.

2. Der Staudruck senkt den Unterdruck an der Profiloberseite des Fan-Rotors, dadurch sinkt dessen Schub bei wachsendem Drehmoment. Der Staudruck bewirkt also am Fan-Rotor keinen erhöhten Widerstand, sondern einen Schubverlust bei erhöhtem Drehmoment.

Dieser zweite Mechanismus ist bisher nicht bekannt und wird beim Triebwerksentwurf nicht berücksichtigt. Beide Mechanismen haben erhebliche Auswirkung auf die Effizienz der Strahlpropulsion und den Triebwerksentwurf. Auch hier gibt es zwei gegenläufige Effekte:

1. Mit steigendem Druckverhältnis wächst der thermische Wirkungsgrad des Joule-Prozesses, aber der Vorteil aus dem Staudruck sinkt. In der Musterrechnung nach Bräunling Kapitel 6.17 steigt der statische Druck im Einlaufdiffusor von 22'600 Pascal auf 30'600 Pascal, das entspricht einem Druckverhältnis von 1.35. Für ein Gesamtdruckverhältnis von 40.5 muss die Gasturbine den Druck um Faktor 30 steigern. Ein idealer Joule-Prozess mit Druckverhältnis 40.5 hat einen Wirkungsgrad von 65.27%, ein Joule-Prozess mit Druckverhältnis 30 hat einen Wirkungsgrad von 62.16%. Der Einlaufdiffusor liefert also nur einen Anteil von 3.11% zum thermischen Wirkungsgrad. Bei einem Druckverhältnis von 60 sind es nur noch 2.77%. Kurz gesagt: Mit steigendem Druckverhältnis des Joule-Prozesses verliert der Einlaufdiffusor für den thermischen Wirkungsgrad der Gasturbine an Bedeutung.

2. Mit steigendem Bypass-Verhältnis wächst der Schub-Anteil des Fan-Rotors und erreicht heute bereits über 60% des Gesamtschubes. Deshalb nimmt der Schub-Verlust aus dem Staudruck proportional zu. Ab einem bestimmten Bypass-Verhältnis ist der Schaden aus Staudruck durch Schubverlust am Fan-Rotor grösser als der Nutzen für den Joule-Prozess.

Den zweiten Effekt kann man mit Modellrechnungen validieren.

Figuren 8.1 bis 8.4 zeigen hierzu den spezifischen Impuls und den SFC eines Triebwerks aufgetragen über der normierten Reisegeschwindigkeit, sowie über dem Bypass-Verhältnis. Jedes Diagramm zeigt ideale Werte ohne Schubverlust aus Staudruck im Vergleich zu realen Werten mit Schubverlust am Fan-Rotor. Der Joule-Prozess ist mit 60% Wirkungsgrad modelliert, das entspricht einem idealen Druckverhältnis von 25. Bei realen Triebwerken muss das Druckverhältnis für 60% Wirkungsgrad deutlich höher sein.

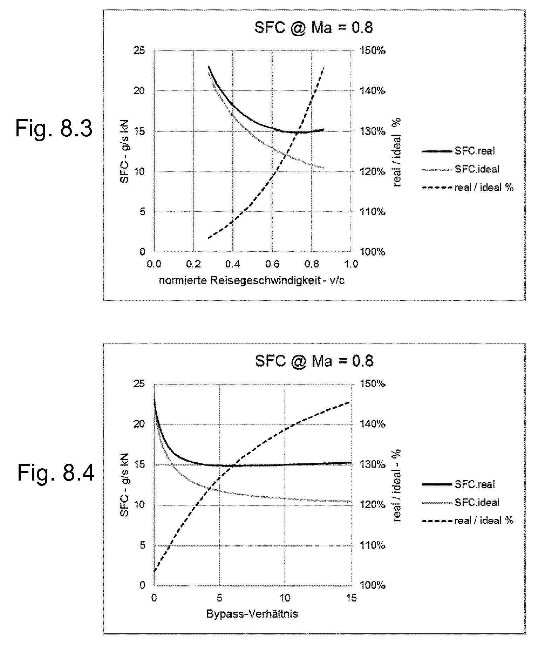

Figur 8.1 und 8.2 zeigen den Einfluss des Staudrucks auf den spezifischen Impuls. Mit wachsendem Bypass-Verhältnis nimmt der Schubverlust zu und kann 20% übersteigen. Figur 8.3 und 8.4 zeigen den Einfluss auf den Treibstoffbedarf. Trotz steigendem Bypass-Verhältnis stagniert der reale SFC auf einem Niveau von 15 g/s kN. Die Modellrechnung gibt die Beobachtung aus der Analyse real ausgeführter Triebwerke nach Figur 2 recht genau wieder. Danach liegt der Treibstoffbedarf im Reiseflug bei Mach = 0.8 um bis zu 45% über der idealen Modellannahme.

Die Analyse zeigt, dass der Treibstoffbedarf von Turbofantriebwerken im Reiseflug von bisher unbekannten Faktoren beeinflusst wird, die beim Entwurf von Triebwerken berücksichtig werden müssen:

1. Das Geschwindigkeitsprofil der Strömung im Turbofantriebwerk führt zu versteckten inneren thermischen Verlusten aus Verzögerung und Druckaufbau.

2. Der Staudruck im Einlaufdiffusor bewirkt einen Schubverlust am Fan-Rotor, den die Impulsbilanzrechnung nicht erkennen kann.

Die Erfindung soll Turbofantriebwerke optimieren und deren Effizienz verbessern. Dazu dienen zwei Massnahmen:

1. Das Geschwindigkeitsprofil der Massenströme M1 und M2 bei Durchströmung des Triebwerks wird optimiert, indem es quasi geglättet wird, um die versteckten thermischen Verluste zu reduzieren.

2. Der Staudruckeinfluss auf den Fan-Rotor wird minimiert, um die Schubverluste zu reduzieren.

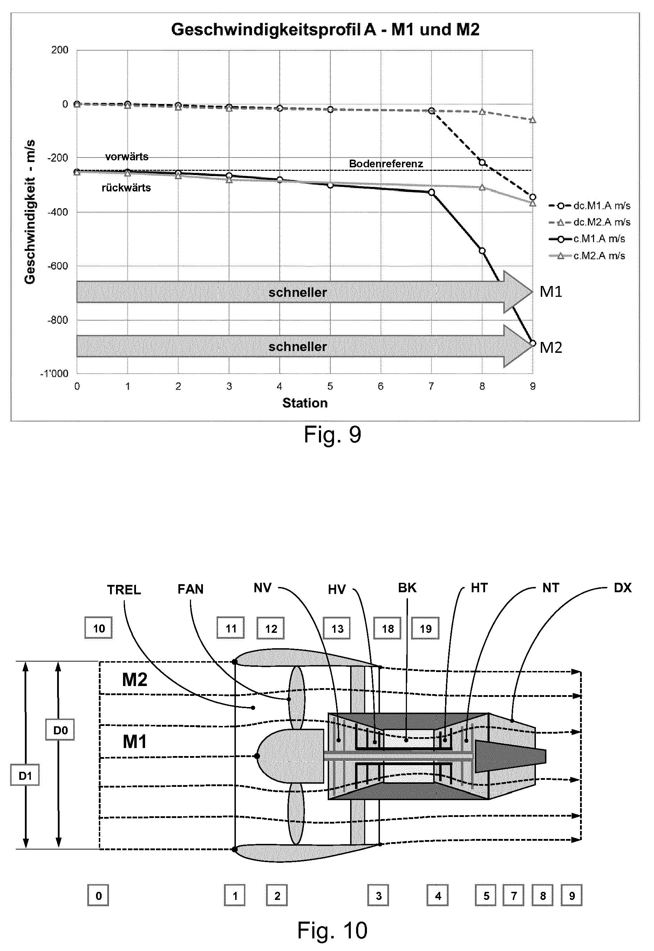

Die Bezugszeichen im Folgenden können den Figuren 9 bis 12 entnommen werden.

Die Erfindung betrifft ein Turbofantriebwerk mit einem Triebwerksgehäuse, welches Triebwerksgehäuse einen Triebwerkseinlauf (TREL), einen Fan-Rotor (FAN), ein Kerntriebwerk mit einem Eingangsdurchmesser und einer primären Schubdüse, und eine sekundären Schubdüse, aufweist, wobei sich der Triebwerkseinlauf als ein innerer Raum des Triebwerksgehäuses von einem Strömungseingang des Triebwerksgehäuses bis zum Fan-Rotor erstreckt, und wobei der Fan-Rotor vom Kerntriebwerk vermittels einer gemeinsamen Rotationsachse antreibbar ist, und wobei der Fan-Rotor so angeordnet und ausgebildet ist, dass sich - bezogen auf eine Strömungsrichtung, welche vom Strömungseingang zum Fan-Rotor weist - einer radial äusseren Kreisringfläche des Fan-Rotors die sekundäre Schubdüse anschliesst, und einer radial inneren Kreisfläche des Fan-Rotors das Kerntriebwerk anschliesst, wobei der Triebwerkseinlauf bezogen auf die Rotationsachse ein Querschnittsprofil aufweist, dessen Verlauf vom Strömungseingang zum Fan-Rotor parallel oder konvergierend ausgebildet ist, wobei die grösste Querschnittsfläche des Triebwerkseinlaufs kleiner als die grösste Querschnittsfläche des Triebwerksgehäuses ist, und wobei die kleinste Querschnittsfläche des Triebwerkseinlaufs grösser als die Querschnittsfläche des Fan-Rotors ist.

Dadurch, dass der Verlauf des Querschnitts des Triebwerkseinlaufs innerhalb des genannten Bereichs liegt, wird ein aerodynamisch günstiger Einlauf realisiert. Die Staulinie wird möglichst klein gehalten. Durch dieses Layout-Prinzip erfolgt eine Strömungsoptimierung und die Verluste, z.B. durch einen Luftwiderstand, werden minimiert.

In einer Ausführungsform des erfindungsgemässen Turbofantriebwerks, wobei der Querschnittsverlauf des Triebwerkseinlaufs konvergierend ausgebildet ist, ist die kleinste Querschnittsfläche des Triebwerkseinlaufs um 25%, insbesondere 10%, vorzugsweise 5% kleiner, als die grösste Querschnittsfläche des Triebwerkseinlaufs.

In einer weiteren Ausführung der Erfindung weist das Triebwerksgehäuse einen Diffusor (DF1) auf, welcher konzentrisch mit dem Fan-Rotor verbunden ist und gemeinsam mit diesem rotiert.

In einer weiteren Ausführung der Erfindung weist der Diffusor an einem Ende, das dem Kerntriebwerk zugewandt ist, einen Durchmesser auf, der im Wesentlichen dem Eingangsdurchmesser des Kerntriebwerks entspricht.

In einer weiteren Ausführung der Erfindung ist der Diffusor (DF1) so angeordnet und ausgebildet, dass er sich im Triebwerkseinlauf bis zum Kerntriebwerk erstreckt.

In einer weiteren Ausführung der Erfindung ist zwischen dem Diffusor und dem - bezogen auf das Triebwerksgehäuse-stationär angeordneten Kerntriebwerk eine ringförmige Druckdichtung (DD) vorgesehen.

In einer weiteren Ausführung der Erfindung ist der Diffusor von dem radial äusseren Teil des Fan-Rotors umgeben.

In einer weiteren Ausführung der Erfindung ist der radial innere Teil des Fan-Rotors vom Diffusor umgeben.

In einer weiteren Ausführung der Erfindung umfasst der Fan-Rotor in der Mitte der radial inneren Kreisfläche eine Rotornabe, wobei der Diffusor die Rotornabe des Fan-Rotors zumindest teilweise umhüllt, insbesondere wobei ein Raum zwischen einer Wand RDG des Diffusors DF1 und der Rotornabe in Strömungsrichtung divergierend ausgebildet ist.

Die Erfindung betrifft weiterhin ein Verfahren zur Schuberzeugung für ein Turbofantriebwerk, wobei ein Luftmassenstrom mit einem ersten Luftmassenstromteil M1 und einem zweiten Luftmassenstromteil M2 in einen Triebwerkseinlauf TREL einströmt, der sich als innerer Teil des Triebwerksgehäuses von einem Strömungseingang eines Triebwerksgehäuses bis zu einem Fan-Rotor FAN erstreckt, und wobei in Strömungsrichtung nach dem Fan-Rotor der erste Luftmassenstromteil M1 in ein Kerntriebwerk eintritt und der zweite Luftmassenstromteil M2 in eine sekundäre Schubdüse eintritt, wobei die Geschwindigkeit zumindest eines der Luftmassenstromteile M1,M2 - vermittels des Querschnittsverlaufs des Triebwerkseinlaufs gemäss Anspruch 1 - auf dem Weg durch den Triebwerkseinlauf TREL erhöht wird oder konstant bleibt.

In einer weiteren Ausführung der Erfindung wird die Geschwindigkeit eines der Luftmassenstromteile (M1,M2) auf dem Weg durch den Triebwerkseinlauf (TREL) erhöht, wobei die Geschwindigkeitserhöhung 20%, insbesondere 10%, insbesondere 5% beträgt.

In einer weiteren Ausführung der Erfindung wird die Geschwindigkeit des ersten Luftmassenstromteils (M1) auf einer Strecke, welche vom Triebwerkseinlauf zum Kerntriebwerk reicht, verringert.

In einer weiteren Ausführung der Erfindung durchläuft der erste Luftmassenstromteil M1 während seiner Geschwindigkeitsreduktion eine radial innere Kreisfläche des Fan-Rotors.

In einer weiteren Ausführung der Erfindung wird die Geschwindigkeit des zweiten Luftmassenstromteils M2 auf dem Weg durch den Fan-Rotor erhöht.

In einer weiteren Ausführung der Erfindung weist zumindest einer der Luftmassenstromteile M1,M2 auf seinem Weg durch das Turbofantriebwerk einen Geschwindigkeitsverlauf auf, der monoton steigend oder streng monoton steigend ist.

Mit anderen Worten ausgedrückt werden für den Betriebspunkt zwei Geschwindigkeitsprofile im Reiseflug entworfen und konstruktiv umgesetzt. Diese Geschwindigkeitsprofile zeichnen sich durch eine Glättung aus, welche insbesondere ein monotones Beschleunigen zumindest eines der Luftmassenstromteile M1,M2 zulässt.

Mit anderen Worten gesagt, wird also ein Verfahren zur Verbesserung von Turbofan-Triebwerken für Verkehrsflugzeuge im Reiseflug vorgeschlagen, wobei die Strömungsgeschwindigkeit von Massenströmen M1 und M2 in Triebwerkskoordinaten im Auslegungspunkt des Reisefluges über Stationen 1 bis 9 sowie 1 bis 19, welche den Figuren entnommen werden können, zunimmt, wobei der Betrag der Geschwindigkeit dann an jeder Station grösser oder gleich dem Betrag der Geschwindigkeit der stromaufwärts gelegenen Nachbarstation ist (siehe Geschwindigkeitsprofil A nach Figur 9).

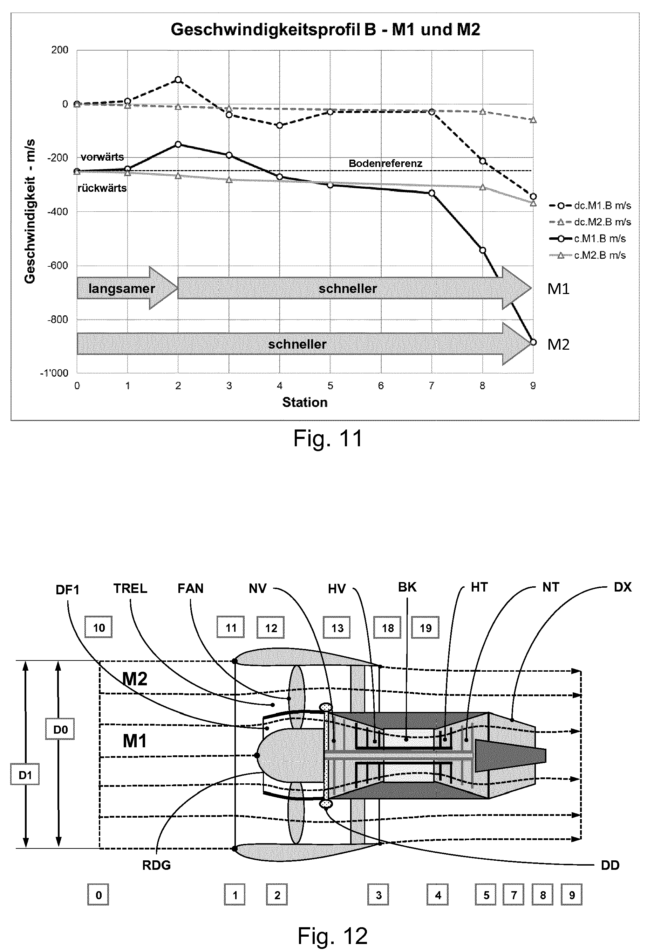

Weiterhin wird ein Verfahren zur Verbesserung von Turbofan-Triebwerken für Verkehrsflugzeuge im Reiseflug vorgeschlagen, bei welchem nur der Massenstrom M1 von Station 1 bis Station 2 durch Staueffekt verzögert wird und die Strömungsgeschwindigkeit des Massenstroms M1 und M2 in Triebwerkskoordinaten im Auslegungspunkt des Reisefluges über alle Stationen 2 bis 9 sowie 1 bis 19 zunimmt, wobei der Betrag der Geschwindigkeit dann an jeder Station grösser oder gleich dem Betrag der Geschwindigkeit der stromaufwärts gelegenen Nachbarstation ist (siehe Geschwindigkeitsprofil B nach Figur 11).

In einer Ausführungsform des erfindungsgemässen Verfahrens erfüllt der Massenstrom M1 die Geschwindigkeitsbedingung nur bis Station 3.

Weiterhin wird eine Vorrichtung zur Umsetzung der benannten Verfahren vorgeschlagen, durch welche die Strömungsquerschnitte an jeder Station 1 bis 9 und 10 bis 19 geometrisch so gestaltet sind, dass die benannten Bedingungen erfüllt ist (monoton steigende Geschwindigkeit von M1 und/oder M2).

In einer Ausführungsform der Vorrichtung ist die Durchströmfläche am Triebwerkseintritt bei Station 1 um den Faktor 0.9 bis 1.2 mal so gross wie die Summe der Durchströmfläche von beiden Massenströmen M1 und M2 bei Station 2.

In einer weiteren Ausführungsform der Vorrichtung ist in Nabennähe des Fan-Rotors ein Diffusor DF1 mit einem rotierenden Gehäuse RDG vorgesehen, der nur den Massenstrom M1 durch Staueffekt verzögert, wobei sich der Einlass des Diffusors bevorzugt vor den Fan-Schaufeln befindet, und sich der Auslass des Diffusors hinter den Fan-Schaufeln befindet, und der Diffusor mit dem Fan-Rotor koaxial fest verbunden ist und mit ihm rotiert, und wobei zwischen dem Auslass des Diffusors und dem Einlass in das Kerntriebwerk eine rotierende Dichtung vorhanden ist, die den Massenstrom M1 gegen den Massenstrom M2 abdichtet.

Figur 9 zeigt gemäss einem Ausführungsbeispiel der Erfindung ein erstes Geschwindigkeitsprofil A, in dem beide Massenströme M1 und M2 von Station zu Station beschleunigt werden, wobei die Verzögerung mit statischem Druckaufbau durch den Einlaufdiffusor entfällt. Bei diesem Verfahren verzichtet man auf den thermischen Effizienzgewinn für den Joule-Prozess aus dem Staudruck im Triebwerkseinlauf und reduziert alle versteckten Verluste, die durch "bremsen-beschleunigen-bremsen-beschleunigen" entstehen. Die Schuberzeugung aus Reaktion auf die Massenkräfte infolge der Beschleunigung ist homogen im Triebwerk verteilt, wobei der Hauptanteil des Schubes bei der Beschleunigung in den Schubdüsen entsteht. Das besondere Merkmal dieser Gestaltung ist, dass die zuströmende Luft sich stets rückwärts über Grund bewegt. Jeder Punkt des Geschwindigkeitsprofils liegt unterhalb der Bodenreferenzlinie. Das Geschwindigkeitsprofil kann man durch Gestaltung der Strömungsquerschnitte erreichen. Der Fan-Rotor wird dann schneller angeströmt, die Blattspitzen-Machzahl steigt, und bei transsonischen Rotoren wandert die Überschalltransition näher zur Rotornabe.

Noch einmal zusammengefasst, werden die Beschleunigungen der beiden Luftmassenstromteile M1 und M2 mit den Pfeilen im unteren Teil des Diagramms der Figur 11 dargestellt. Beide Luftmassenstromteile werden also nie abgebremst und weisen sogar zu keinem Zeitpunkt im Prozess eine - bezogen auf den Erdboden - der Flugrichtung entgegen gerichtete Geschwindigkeit auf.

Figur 10 zeigt als ein Ausführungsbeispiel der Erfindung das Schema eines Triebwerks zur Umsetzung des Geschwindigkeitsprofils A nach Figur 9. Der Triebwerkseinlauf TREL ist hier nicht als Diffusor ausgeführt. Hier ist zu sehen, dass der Verlauf des Querschnittprofils des Triebwerkseinlaufs bezogen auf, d.h. entlang der Rotationsachse parallel ist. Der Strömungseingang (also in Figur 10 der links äusserste Rand des Triebwerksgehäuses) kann strömungsgünstig zur Innenseite des Triebwerkseinlaufs hin leicht konvergent ausgebildet sein.

Im Idealfall ist die Fangstromröhre dann zylindrisch, d.h. der Querschnittsverlauf (bezüglich der Rotationsachse des Fan-Rotors) ist parallel; es gibt keinen Aufstau vor dem Triebwerk und die "Bugwelle" entfällt. Bei dieser Gestaltung muss die Strömung bis zum Fan-Rotor wegen dessen Rotornabe noch schneller werden als die Reisegeschwindigkeit. Bei einem Nabenverhältnis von 0.4 muss die Geschwindigkeit von Station 0 bis Station 2 dann um Faktor $1/(1-0.4^2) = 1.19$ zunehmen. Im Reiseflug bei Mach = 0.8 erreicht die Anströmung des Fan-Rotors dann knapp Mach = 1 an der Blattwurzel. Diesen Wert kann man reduzieren, wenn der Durchström-Querschnitt des Fan-Rotors an die Fläche der Fangstromröhre im Reiseflug angepasst wird. Der Querschnittsverlauf des Triebwerkseinlaufs (bezüglich der Rotationsachse des Fan-Rotors) kann auch konvergierend ausgeführt sein, das bedeutet, der Triebwerkseinlaufs fungiert als Konfusor und beschleunigt bedingt durch seinen Querschnittsverlauf den einströmenden Luftmassenstrom von Anfang an, und nicht erst bei Erreichen der Rotornabe.

Figur 11 zeigt gemäss einem weiteren Ausführungsbeispiel der Erfindung ein zweites Geschwindigkeitsprofil B, in dem der Staueffekt für den Massenstrom M1 wieder genutzt wird, um den thermischen Wirkungsgrad der Gasturbine zu steigern. Bis Station 2 wird nur die Strömung von M1 verzögert und dann bis Station 9 durchgehend beschleunigt. Nach Station 2 liegt jeder Punkt des Geschwindigkeitsprofils von M1 unterhalb seines Vorgängers. Der Mantelstrom M2 wird wie zuvor von Station 0 bis Station 9 beschleunigt, und jeder Punkt des Geschwindigkeitsprofils M2 liegt unterhalb der Bodenreferenzlinie und unterhalb von seinem Vorgänger. Bei diesem Verfahren reduziert man alle versteckten Verluste, die durch "bremsen-beschleunigen-bremsen-beschleunigen" entstehen, erhöht den thermischen Wirkungsgrad der Gasturbine, und mindert die Schubverluste durch Staudruck am Fan-Rotor.

Noch einmal zusammengefasst, werden die Verzögerungen und die Beschleunigungen der beiden Luftmassenstromteile M1 und M2 im unteren Teil des Diagramms der Figur 11 anhand der Pfeile dargestellt.

Figur 12 zeigt hierzu das Schema eines Triebwerks zur Realisierung des Geschwindigkeitsprofils B nach Figur 11. Der Triebwerkseinlauf TREL ist wieder nicht als Diffusor ausgeführt, um den Druck für Massenstrom M2 nicht zu erhöhen. Der Staueffekt wird nur für den Kernmassenstrom M1 erzielt. Dazu wird ein Diffusor DF1 eingeführt, der als mit dem Fan rotierendes Gehäuse RDG ausgeführt ist, und den Kernmassenstrom M1 vom Sekundär-Massenstrom M2 trennt. Seine Einlaufkante befindet sich vor dem Fan-Rotor und trennt den Massenstrom nahe der Rotornabe. Der Staueffekt für M1 wirkt dann bereits zwischen den Fan-Schaufeln nahe deren Blattwurzel. Das rotierende Diffusor-Gehäuse RDG erstreckt sich bis zum Einlauf des Kerntriebwerks, am Übergang zum stehenden Strömungskanal ist eine Druckdichtung DD vorgesehen. Mit diesem Ansatz lassen sich bestehende Triebwerke im Einlaufbereich nachrüsten und effizienter gestalten.

Die Durchmesser der beiden Fangstromröhren D0 und D1 sind, wie auch im Beispiel von Figur 10, immer noch gleich gross. D0 (die Fangstromröhre weit vor dem Triebwerk) könnte auch grösser als D1 sein. Im direkten Vergleich zum Beispiel von Figur 10 kann der Kanal für den Luftmassenstromteil M2 gegebenenfalls sogar noch konfuser (also sich düsenartig verjüngend) gestaltet werden, damit die durch den Diffusor DF1 erzeugte Verzögerung durch eine entsprechende Beschleunigung des Luftmassenstromteils M2 ausgeglichen werden kann.

Der Triebwerkseinlauf beeinflusst die Effizienz des gesamten Antriebs, was eine sorgfältige Abstimmung von Einlaufgeometrie und Fan-Rotor erfordert. Die Steigerung der Anströmgeschwindigkeit des Fan-Rotors führt zur Erhöhung der Anströmmachzahl der Blattvorderkante mit einem ausgedehnteren Überschallbereich als bisher. Hier kann es sinnvoll sein, die Geschwindigkeitsreserve der Strömung bis Mach = 1 vor dem Fan nicht völlig auszunutzen, und die Strömung eventuell sogar noch etwas zu verzögern. In diesem Fall liegt die Anströmung des Fan-Rotors unterhalb der Reisegeschwindigkeit und die Eingangsgeschwindigkeit von Triebwerk und Fan liegt knapp oberhalb der Bodenreferenzlinie. Je höher das Bypass-Verhältnis ausfällt, desto geringer sollte die Verzögerung sein. Als Richtwert sollte man die Strömung vor dem Fan um nicht mehr als 10% der Reisegeschwindigkeit verzögern.

Die Gestaltung des Triebwerks nach dem Verlauf der Geschwindigkeit entlang des Strömungspfades durch das gesamte Triebwerk hindurch minimiert versteckte Verluste im Joule-Prozess und verbessert den Wirkungsgrad realer Gasturbinen.

Die Reduzierung oder sogar Vermeidung von Staudruck vor dem Fan-Rotor reduziert die Schubverluste im Reiseflug.

Beide Massnahmen gemeinsam können die Effizienz von Turbofantriebwerken im Reiseflug steigern, wobei die Strömungsgrössen für den Reiseflug ausgelegt werden müssen.

Es versteht sich, dass die vorangehend gezeigten und erklärten Figuren nur mögliche Ausführungsbeispiele schematisch darstellen. Insbesondere wird darauf hingewiesen, dass die explizit dargestellten und erklärten Beispiele ausnahmslos sowohl separat voneinander als auch in jeglicher Kombination miteinander einsetzbar sowie auch mit entsprechenden Vorrichtungen und Verfahren des Stands der Technik kombinierbar sind.

**Patentansprüche**

1. Turbofantriebwerk mit einem Triebwerksgehäuse, welches Triebwerksgehäuse

   • einen Triebwerkseinlauf (TREL),
   • einen Fan-Rotor (FAN),
   • ein Kerntriebwerk mit einem Eingangsdurchmesser und einer primären Schubdüse, und
   • eine sekundären Schubdüse,

   aufweist,
   wobei sich der Triebwerkseinlauf als ein innerer Raum des Triebwerksgehäuses von einem Strömungseingang des Triebwerksgehäuses bis zum Fan-Rotor erstreckt, und wobei der Fan-Rotor vom Kerntriebwerk vermittels einer gemeinsamen Rotationsachse antreibbar ist, und
   wobei der Fan-Rotor so angeordnet und ausgebildet ist, dass sich - bezogen auf eine Strömungsrichtung, welche vom Strömungseingang zum Fan-Rotor weist -

   ○ einer radial äusseren Kreisringfläche des Fan-Rotors die sekundäre Schubdüse anschliesst, und
   ○ einer radial inneren Kreisfläche des Fan-Rotors das Kerntriebwerk anschliesst,

   **dadurch gekennzeichnet, dass**
   der Triebwerkseinlauf bezogen auf die Rotationsachse ein Querschnittsprofil aufweist, dessen Verlauf vom Strömungseingang zum Fan-Rotor parallel oder konvergierend ausgebildet ist,
   wobei die grösste Querschnittsfläche des Triebwerkseinlaufs kleiner als die grösste Querschnittsfläche des Triebwerksgehäuses ist, und
   wobei die kleinste Querschnittsfläche des Triebwerkseinlaufs grösser als die Querschnittsfläche des Fan-Rotors ist.

2. Turbofantriebwerk nach Anspruch 1,
   wobei der Verlauf des Querschnittsprofils des Triebwerkseinlaufs konvergierend ausgebildet ist,
   **dadurch gekennzeichnet, dass**
   die kleinste Querschnittsfläche des Triebwerkseinlaufs um 25%, insbesondere 10%, vorzugsweise 5% kleiner ist, als die grösste Querschnittsfläche des Triebwerkseinlaufs.

**3.** Turbofantriebwerk nach einem der Ansprüche 1 bis 2,
**dadurch gekennzeichnet, dass**
das Triebwerksgehäuse einen Diffusor (DF1) aufweist, welcher konzentrisch mit dem Fan-Rotor verbunden ist und gemeinsam mit diesem rotiert.

**4.** Turbofantriebwerk nach Anspruch 3,
**dadurch gekennzeichnet, dass**
der Diffusor an einem Ende, das dem Kerntriebwerk zugewandt ist, einen Durchmesser aufweist, der im Wesentlichen dem Eingangsdurchmesser des Kerntriebwerks entspricht.

**5.** Turbofantriebwerk nach einem der Ansprüche 3 bis 4,
**dadurch gekennzeichnet, dass**
der Diffusor (DF1) so angeordnet und ausgebildet ist, dass er sich im Triebwerkseinlauf bis zum Kerntriebwerk erstreckt.

**6.** Turbofantriebwerk nach einem der Ansprüche 3 bis 5,
**dadurch gekennzeichnet, dass**
zwischen dem Diffusor und dem - bezogen auf das Triebwerksgehäuse - stationär angeordneten Kerntriebwerk eine ringförmige Druckdichtung (DD) vorgesehen ist.

**7.** Turbofantriebwerk nach einem der Ansprüche 3 bis 6,
**dadurch gekennzeichnet, dass**
der Diffusor (DF1) von dem radial äusseren Teil des Fan-Rotors umgeben ist.

**8.** Turbofantriebwerk nach einem der Ansprüche 3 bis 7,
**dadurch gekennzeichnet, dass**
der radial innere Teil des Fan-Rotors vom Diffusor (DF1) umgeben ist.

**9.** Turbofantriebwerk nach einem der Ansprüche 3 bis 8,
**dadurch gekennzeichnet, dass**
der Fan-Rotor in der Mitte der radial inneren Kreisfläche eine Rotornabe umfasst, wobei der Diffusor (DF1) die Rotornabe des Fan-Rotors zumindest teilweise umhüllt, insbesondere wobei ein Raum zwischen einer Wand (RDG) des Diffusors (DF1) und der Rotornabe in Strömungsrichtung divergierend ausgebildet ist.

**10.** Verfahren zur Schuberzeugung für ein Turbofantriebwerk,
wobei ein Luftmassenstrom mit einem ersten Luftmassenstromteil (M1) und einem zweiten Luftmassenstromteil (M2) in einen Triebwerkseinlauf (TREL) einströmt, der sich als innerer Teil des Triebwerksgehäuses von einem Strömungseingang eines Triebwerksgehäuses bis zu einem Fan-Rotor (FAN) erstreckt, und
wobei in Strömungsrichtung nach dem Fan-Rotor

• der erste Luftmassenstromteil (M1) in ein Kerntriebwerk eintritt und
• der zweite Luftmassenstromteil (M2) in eine sekundäre Schubdüse eintritt,

**dadurch gekennzeichnet, dass**
die Geschwindigkeit zumindest eines der Luftmassenstromteile (M1,M2) - vermittels des Verlaufs des Querschnittsprofils des Triebwerkseinlaufs gemäss Anspruch 1 - auf dem Weg durch den Triebwerkseinlauf (TREL) erhöht wird oder konstant bleibt.

**11.** Verfahren nach Anspruch 10,
wobei die Geschwindigkeit eines der Luftmassenstromteile (M1,M2) auf dem Weg durch den Triebwerkseinlauf (TREL) erhöht wird,
**dadurch gekennzeichnet, dass**
die Geschwindigkeitserhöhung 20%, insbesondere 10%, insbesondere 5% beträgt.

**12.** Verfahren nach einem der Ansprüche 10 bis 11,
**dadurch gekennzeichnet, dass**
die Geschwindigkeit des ersten Luftmassenstromteils (M1) auf einer Strecke, welche vom Triebwerkseinlauf zum Kerntriebwerk reicht, verringert wird.

**13.** Verfahren nach Anspruch 11,
**dadurch gekennzeichnet, dass**
der erste Luftmassenstromteil (M1) während seiner Geschwindigkeitsreduktion eine radial innere Kreisfläche des Fan-Rotors durchläuft.

**14.** Verfahren nach einem der Ansprüche 10 bis 13,
**dadurch gekennzeichnet, dass**
die Geschwindigkeit des zweiten Luftmassenstromteils (M2) auf dem Weg durch den Fan-Rotor erhöht wird.

**15.** Verfahren nach einem der Ansprüche 10 bis 14,
**dadurch gekennzeichnet, dass**
zumindest einer der Luftmassenstromteile (M1,M2) auf seinem Weg durch das Turbofantriebwerk einen Geschwindigkeitsverlauf aufweist, der monoton steigend oder streng monoton steigend ist.

STAND DER TECHNIK

Fig. 1

Fig. 2

## eta.Gesamt @ Ma = 0.8

Fig. 3

## Geschwindigkeitsprofil alt - M1 und M2

Fig. 4

19

Fig. 5.1

-150
-370
-250
-900

0       2                               9

19

Fig. 5.2

+100
0       -120
-650

250

0       2                               9

F_u

F_x

F

w
α
δ
c_x
β
Unterdruck
u
Überdruck
γ
Rotorebene

c_a                    AP

Drehachse

α

Fig. 6

Fig. 7

Fig. 8.1

spezifischer Impuls @ Ma = 0.8

Fig. 8.2

spezifischer Impuls @ Ma = 0.8

Fig. 8.3

Fig. 8.4

## Geschwindigkeitsprofil A - M1 und M2

Fig. 9

Fig. 10

Fig. 11

Fig. 12

**Europäisches Patentamt**
**European Patent Office**
**Office européen des brevets**

# EUROPÄISCHER RECHERCHENBERICHT

**Nummer der Anmeldung**

EP 16 15 8556

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | GB 1 341 295 A (FAHLBUSCH H E)<br>19. Dezember 1973 (1973-12-19)<br>* Seite 2, Zeile 24 - Seite 2, Zeile 28 *<br>* Seite 2, Zeile 52 - Seite 2, Zeile 54 *<br>* Ansprüche 1,2 *<br>* Abbildungen 1,2 *<br>* das ganze Dokument *<br><br>----- | 1,3-10,<br>12,13<br>2,11,14,<br>15 | INV.<br>F02K3/06<br>F02C7/04 |
| X<br>Y | US 2016/003145 A1 (QIU YUAN J [US] ET AL)<br>7. Januar 2016 (2016-01-07)<br>* Absätze [0041], [0047] *<br>* Abbildungen 3a,3b *<br>* das ganze Dokument *<br><br>----- | 1,10<br>2,11,14,<br>15 | |

**RECHERCHIERTE SACHGEBIETE (IPC)**

F02K
F02C

Der vorliegende Recherchenbericht wurde für alle Patentansprüche erstellt

| Recherchenort | Abschlußdatum der Recherche | Prüfer |
|---|---|---|
| Den Haag | 13. September 2016 | Herbiet, J |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

......................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 16 15 8556

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-09-2016

| Im Recherchenbericht angeführtes Patentdokument | Datum der Veröffentlichung | Mitglied(er) der Patentfamilie | Datum der Veröffentlichung |
|---|---|---|---|
| GB 1341295 A | 19-12-1973 | CA 935291 A<br>DE 2106876 A1<br>GB 1341295 A | 16-10-1973<br>02-12-1971<br>19-12-1973 |
| US 2016003145 A1 | 07-01-2016 | EP 2964924 A1<br>US 2016003145 A1<br>WO 2014137685 A1 | 13-01-2016<br>07-01-2016<br>12-09-2014 |

Für nähere Einzelheiten zu diesem Anhang : siehe Amtsblatt des Europäischen Patentamts, Nr.12/82